# EUROPEAN PATENT APPLICATION

(11) **EP 2 623 420 A2**
(43) Date of publication of application: **07.08.2013**
(21) Application number: 13153529.6
(22) Date of filing: 31.01.2013
(51) Int. Cl.: B64D 15/16

(54) **Aircraft ice protection system**

(30) Priority: 31.01.2012 US 201261593235 P
(71) Applicant: Goodrich Corporation, Charlotte, North Carolina 28217 (US)
(72) Inventor: Fahrner, Alan J, Canton, OH Ohio 44708 (US)
(74) Representative: Hargreaves, Timothy Edward

(57) **Abstract**

An ice protection system (20) comprises a deicer pad (30) with a first chamber (40) and a second chamber (50) bordering the first chamber (40). The inflation channels (41) in the first chamber (40) do not communicate with the inflation channels (51) in the second chamber (50). An inflation-fluid source (80) is plumbed to a connection port (43) and a connection port (53), both of which are located on an inboard providence of the deicer pad (30).

## Description

An aircraft typically includes an ice protection system to remove ice from its wings during flight. An ice protection system can comprise a deicer pad having inflation channels, a manifold communicating with the inflation channels, and a connection port for supplying inflation fluid to the manifold. To remove accumulated ice from a wing surface, an inflation fluid is repeatedly introduced and evacuated from the channels.

### SUMMARY

An ice protection system comprises a deicer pad with fluidly-segregated chambers having inflation channels supplied with fluid by separate manifolds. The deicer pad can be advantageously constructed to accommodate inboard port connections and/or to allow direct routing of inflation fluid to connection-remote channels. And this deicer layout can significantly widen the window of options for chordwise-placement of the connection ports during wing design.

### DRAWINGS

Figure 1 shows an aircraft having the ice protection apparatus installed on each wing.
Figures 2-3 show front and sectional views of the wing.
Figure 4 shows the ice protection apparatus with its deicer pad in a flattened form, and Figures 4A-4C show the deicer pad in different inflation conditions.
Figure 5 shows a layered assemblage of the deicer pad.
Figures 6-20 show other versions of the ice protection apparatus with its deicer pad in a flattened form.

### DESCRIPTION

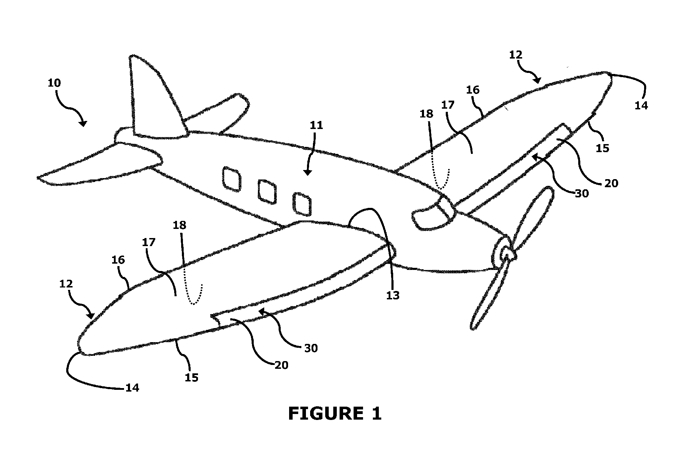

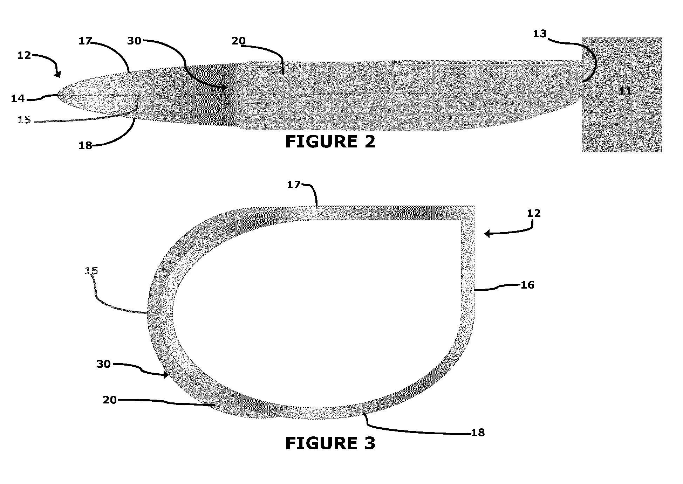

Referring to Figures 1-3, an aircraft 10 comprises fuselage 11 and wings 12. The wings 12 each have an inboard end 13 attached to the fuselage 11, an outboard end 14, a leading edge 15, a trailing edge 16, a topside 17, and an underside 18. The aircraft 10 is provided with an ice protection system 20 which includes a deicer pad 30 installed on each wing 12. Each deicer pad 30 curves around its wing's leading edge 15 in a parabolic-like fashion, so as to cover this stagnation surface and also adjoining surfaces on the topside 17 and the underside 18.

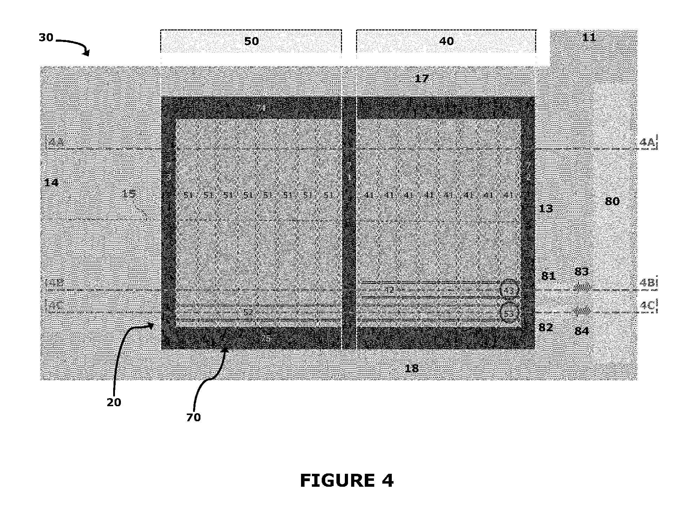

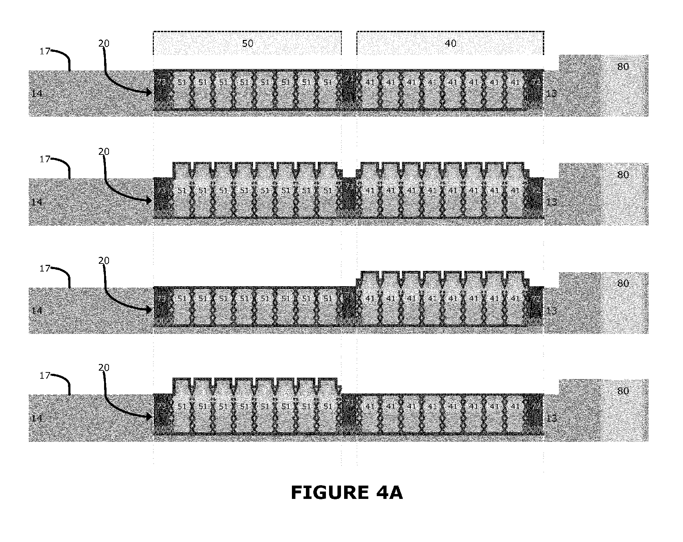

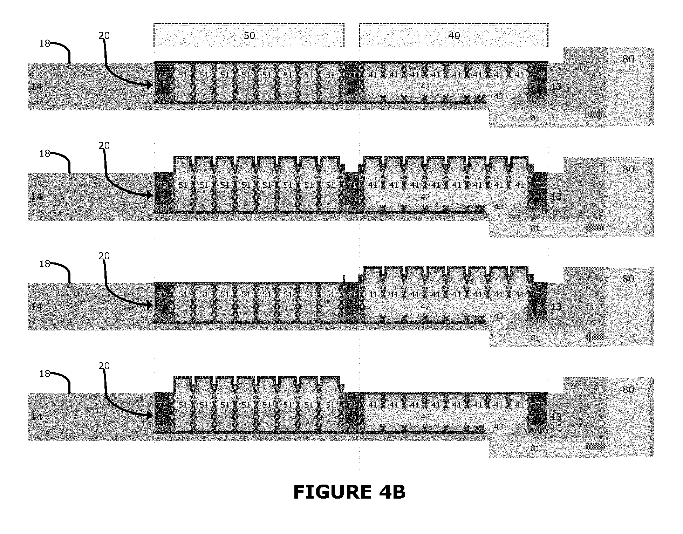

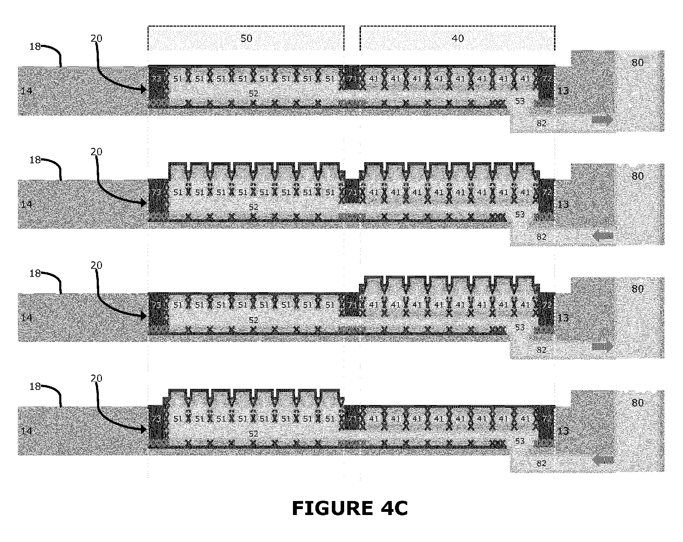

Referring to Figure 4, the ice protection system 20 is shown with its deicer pad 30 and the underlying wing surface in a flattened form for fluency in explanation. Figures 4A-4C each show sectional views of this flattened form in different inflation patterns, with layer thicknesses, corner sharpness, and other features being somewhat exaggerated to ease illustration.

The deicer pad 20 comprises a first chamber 40 and a second chamber 50 which borders the first chamber 40. The first chamber 40 is an inboard chamber and the second chamber 50 is an outboard chamber. In other words, the chambers are situated side-by-side in the spanwise direction (i.e. the inboard-outboard direction).

A series of adjacent inflation channels 41 are arranged sequentially in the first chamber 40 to extend in a chordwise direction (i.e., in the topside-bottomside direction). A manifold channel 42 fluidly communicates with the inflation channels 41 and a connection port 43. To place the first chamber 40 is an inflated condition; fluid is supplied through port 43 to the manifold 42 which conveys it to each of the inflation channels 41.

Likewise, a series of adjacent inflation channels 51 are arranged sequentially in the first chamber 50 to extend in a chordwise direction. A manifold channel 52 fluidly communicates with these inflation channels 51 and with a connection port 53. To place the second chamber 50 in an inflated condition, fluid is supplied through the connection port 53 to the manifold 52 which conveys it to each of the inflation channels 51.

To remove a sheet ice from the wing 12, an inflation fluid (e.g., air) is repeatedly introduced and evacuated from the channels 41/51 to cycle the chambers 40/50 between inflated and deflated conditions. This cycling displaces the boundary layer of ice sheet, thereby breaking it into small pieces which are swept away by the airstream.

The inflation channels 41 in the first chamber 40 do not fluidly communicate with the inflation channels 51 in the second chamber 50. The manifold channel 42 does not fluid communicate with the inflation channels 51 and the manifold channel 52 does not communicate with the inflation channels 41. And the manifold channels 42 and 52 do not communicate with each other.

The fluid segregation of the chambers helps insure that a leak (e.g., a puncture) in one chamber does not affect the channel-inflation capabilities of the other chamber. And the discrete manifold design allows inflation fluid to be directly routed to channels remote from connection ports.

Although the chamber 40 and the chamber 50 are depicted as being of substantially the same size, one chamber's dimensions could dominate the other to further deicing objectives. And although only rectangular-shaped chambers are shown, other regular and irregular chamber geometries are feasible and foreseeable. Additionally or alternatively, the size/shape of the inflation channels can vary from chamber to chamber, and also within individual chambers. Moreover, the deicer pad 30 could comprise additional chambers.

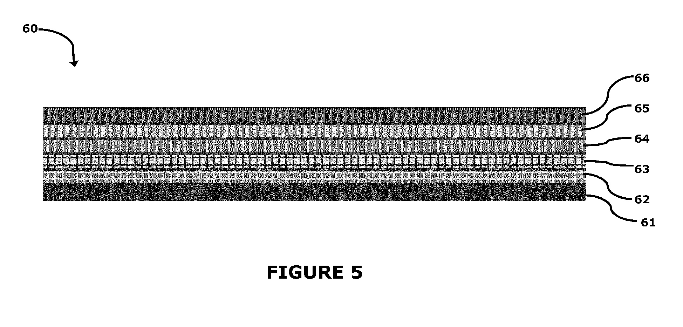

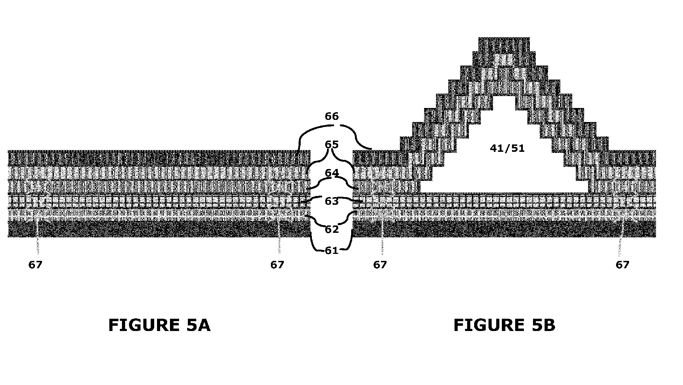

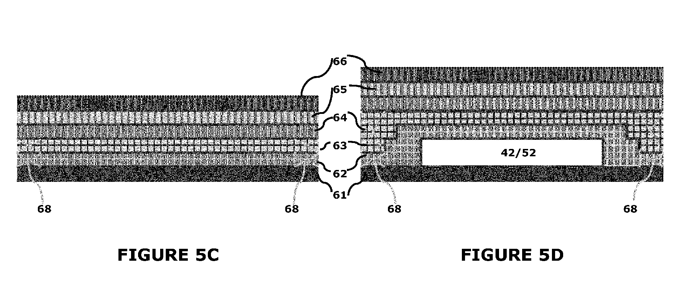

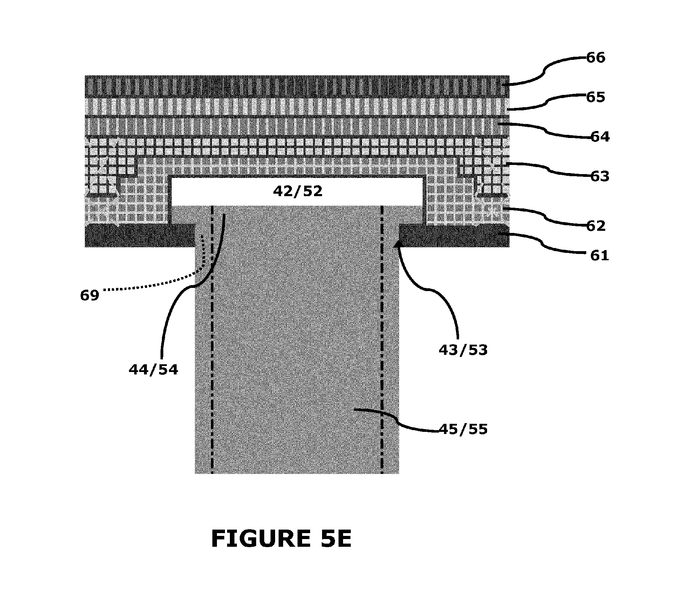

Referring to Figure 5, the deicer pad 30 can comprise an assemblage 60 of material layers 61-66 fabricated and featured to define the inflation channels 41/51, the manifold channels 42/52, and the connection ports 43/53. The chamber 40 and the chamber 50 are preferably formed from the same coextensive layers 61-66.

The layers of the assemblage 60 can include, for example, a base layer 61 (e.g., neoprene), channel-defining layers 62-65 (e.g., rubber coated nylon), and a cover layer 66 (e.g., neoprene).

The layers 61-66 will usually all be impervious with respect to the inflation fluid. The inner layers 61-63 can be non-stretchable to insure that the pad 30 can be securely and trimly mounted to the wing 12. The outer layers 64-66 being stretchable to accommodate the inflation and deflation of the channels 41/51.

As shown in Figures 5A-5B, stitches 67 joining the layers 62-63 to the layers 64-65 define the inflation channels 41/51. As shown in Figures 5C-5D, stitches 68 joining the layer 62 to the layer 63 define the manifold channels 42/52.

As is shown in Figure 5E, each connection port 43/53 is defined by a hole 69 in the base layer 61 which communicates with the corresponding manifold channel 42/52. Each connection port 43/53 can be provided with a fitting having a head 44/54 and a stem 45/55. The head 44/54 is sealed within the hole 69 and the stem 45/55 projects outwardly from the base layer 61. When the deicer pad 30 is installed on the aircraft 10, the stem 45/55 passes through an opening on the surface of the wing 12 and projects into the wing interior.

Referring back to Figure 4, the deicer pad 20 can also include a frame 70 comprising a partition portion 71 and perimeter portions 72-75. The partition portion 71 is situated along the border between the chamber 40 and the chamber 50 and can contribute to the fluid isolation cause. The perimeter portions 72-75 surround the area collectively occupied by the two chambers to fluidly isolate them from the surrounding environment. With the inboard-outboard chambers shown in Figure 4, the partition portion 71 can extend between the topside perimeter portion 74 and the bottomside perimeter portion 75.

The ice protection system 20 can further comprise a source 80 for supplying the deicer connection ports 43 and 53 with inflation fluid during flight. Lines 81 and 82 can be plumbed from the inflation-fluid source 80 to the deicer pad's ports 43 and 53, and valves 83 and 84 can be programmed to control fluid flow therethrough.

In the illustrated system 20, the plumbing lines 81 and 82 are both supplied with inflation fluid from a common source 80. However, using separate inflation-fluid sources for each chamber 40/50 is also an option. In fact, the dual-chamber design of the deicer pad 30 is especially suited for this option, as each chamber can be adapted to best accommodate the inflation fluid supplied thereto.

In either or any event, an inflation-fluid source 80 commonly resides in the aircraft's fuselage 11, while the pad's connector stems inhabit the wing's interior. Thus, the lines 81-82 must travel from the fuselage 11 into the wing 12, and then travel to connection ports 43/53. For this reason, inboard deicer connections are often considered the best way to avoid line-plumbing predicaments.

A wing interior often has many non-deicer components competing for legroom (e.g., ribs, spars, etc.), especially in its inboard regions. Accordingly, options for deicer-connection placement in the chordwise direction (i.e., topside-bottomside) can prove very advantageous during wing design. This flexibility allows more placement-critical components to be given priority, and then deicer connections fitted therearound. This flexibility can also come in handy when an old-style deicer pad (e.g., with hand-laid tubes) is retired from an aircraft and a replacement pad is required.

The deicer pad 30 is adapted to allow both the connection port 43 and the connection port 53 to be located on an inboard providence of a chamber. In the pad 30 shown in Figure 4, for example, the connection ports 43 and 53 are both located on the first chamber 40 near its inboard end. The manifold channel 52 passes through the first chamber 40 (without fluidly communicating with the inflation channels 41) on route to the inflation channels 51 in the second channel 50.

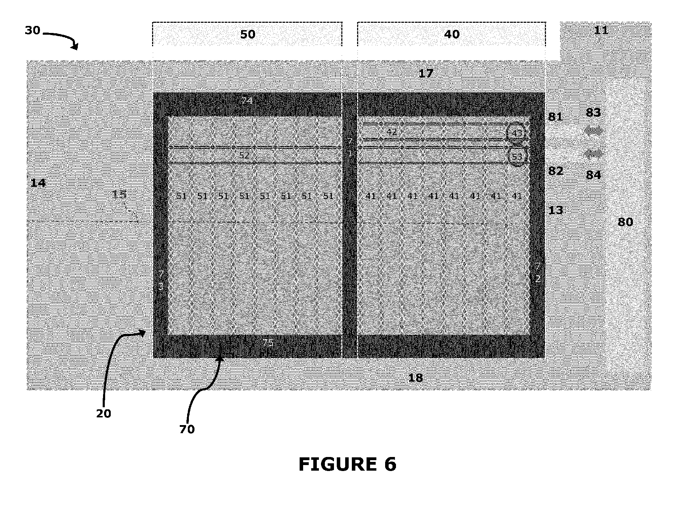

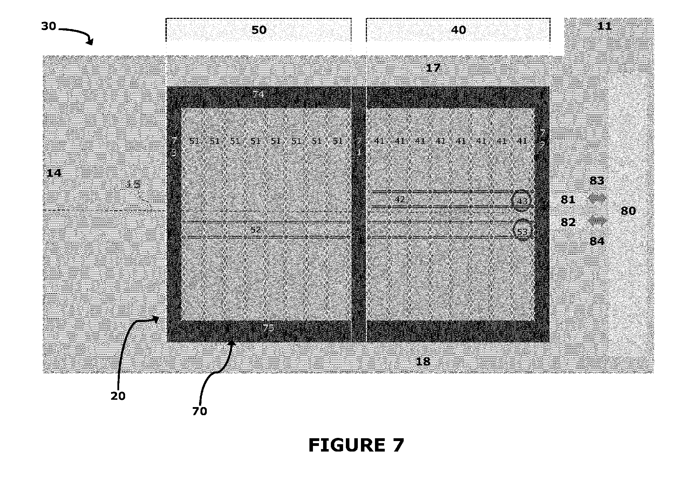

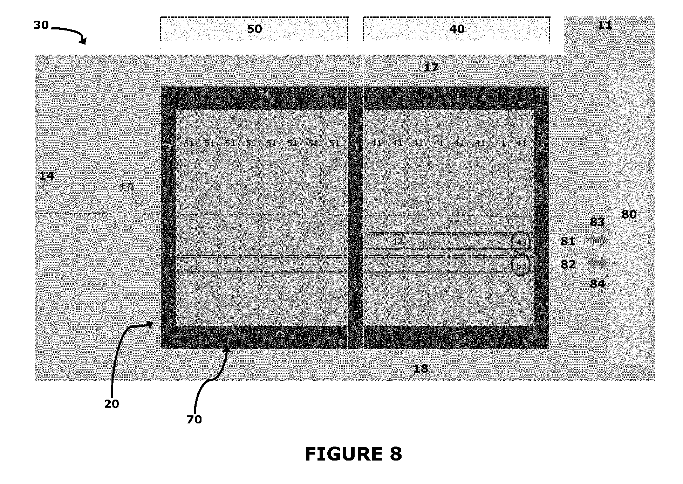

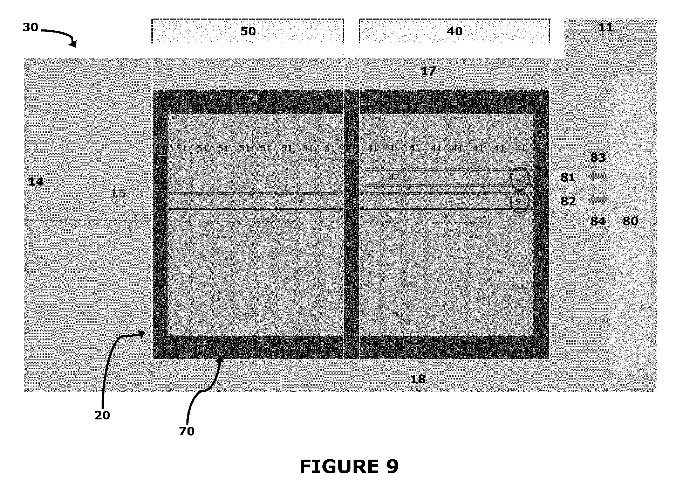

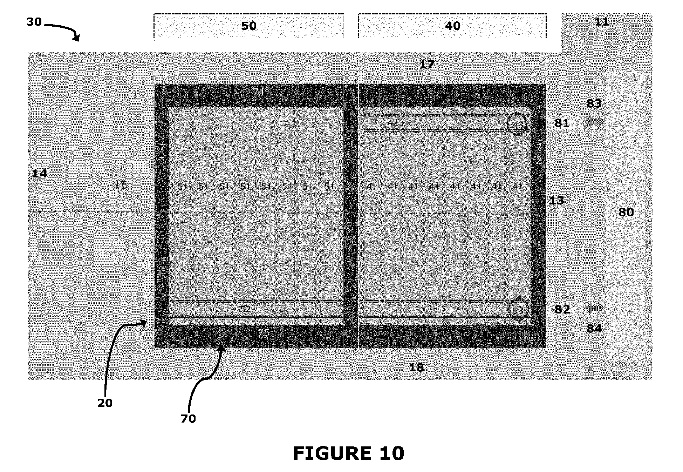

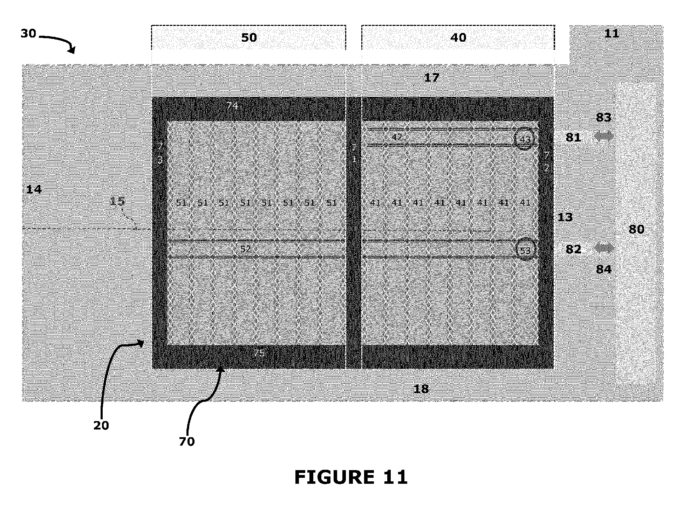

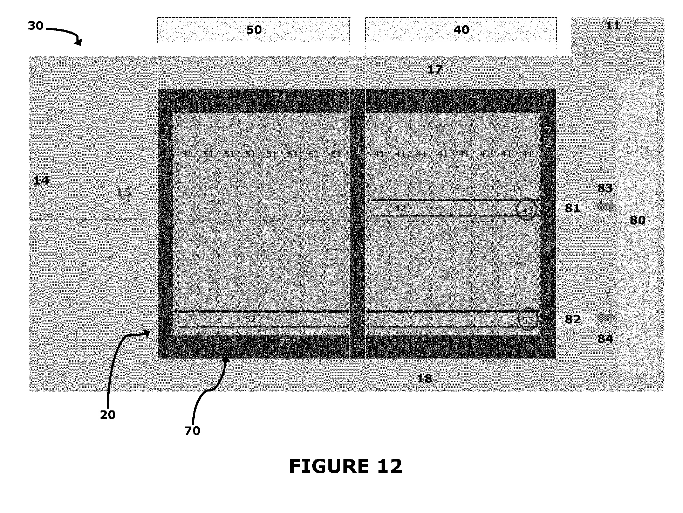

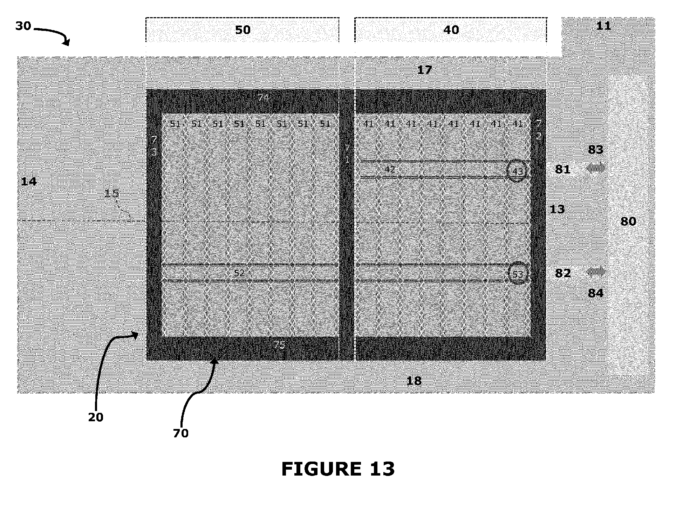

In the deicer pad 30 shown in Figure 4, the connection port 43 and the connection port 53 are neighboring ports located on an inboard-bottomside site on the chamber 40. As shown in Figure 6-9, neighboring connection ports can instead be located on an inboard-topside site, they can be located on a leading-edge-straddling site, or other inboard sites. And although neighboring connection ports will often facilitate inflation-fluid plumbing, the connection port 43 and the connection port 53 can also be aloof from each other as shown in Figures 10-13.

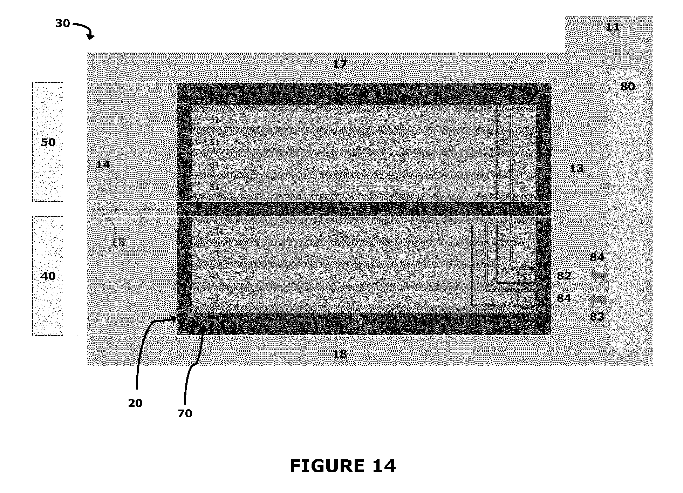

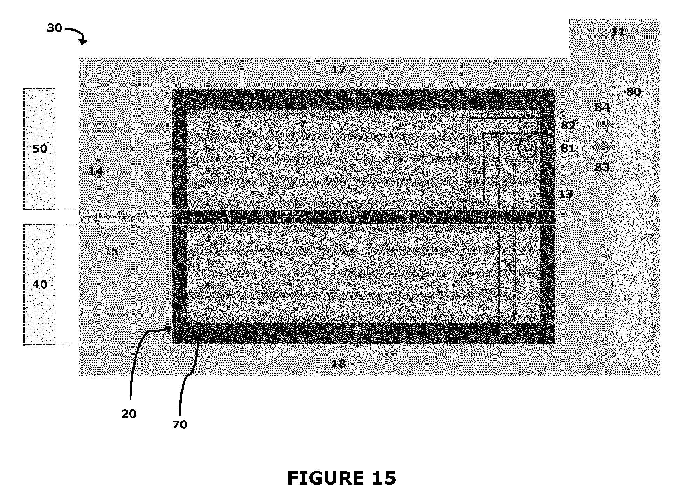

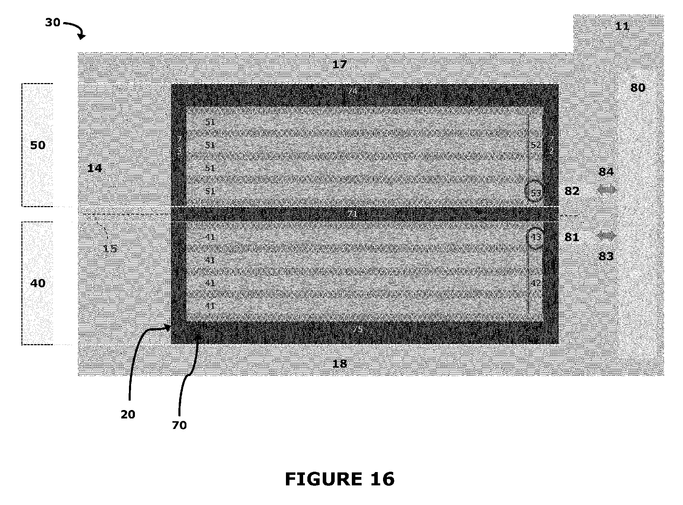

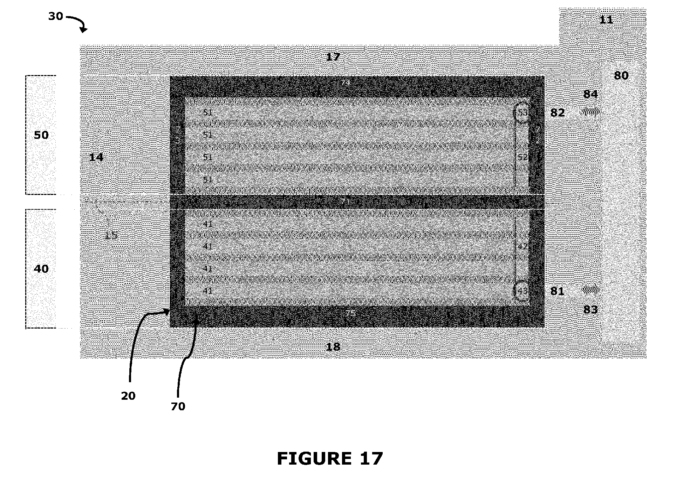

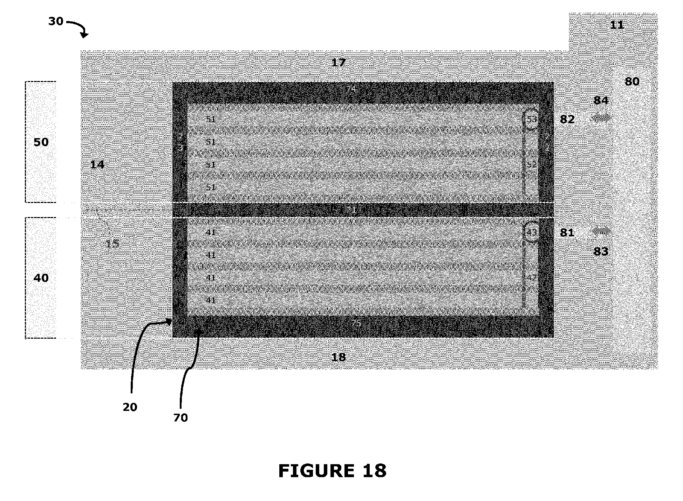

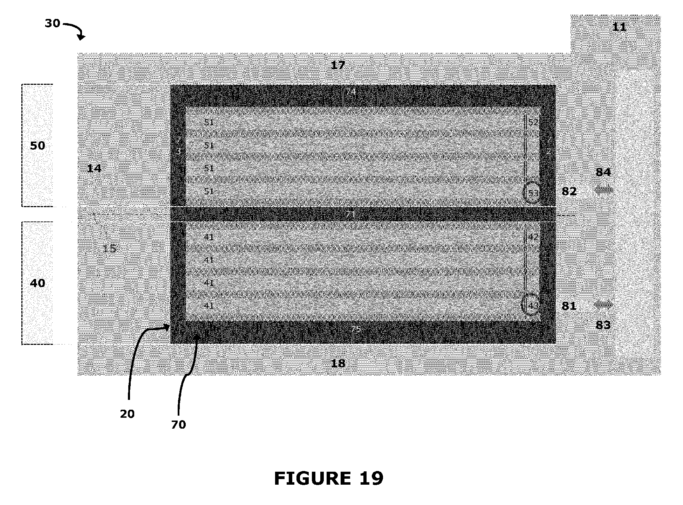

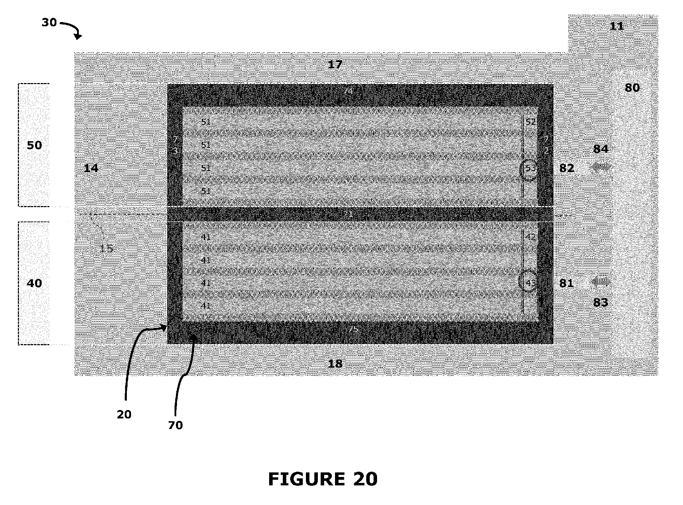

The deicer pads 30 discussed above each comprises spanwise-situated chambers 40/50 having inflation channels 41/51 running in the chordwise direction. As shown in Figures 14-20, chordwise-situated chambers 40/50 having inflation channels 41/51 running in the spanwise direction are also possible and producible can offer the same advantages. With this latter layout, the partition portion 71 of the frame 70 could extend between its inboard perimeter portion 72 and its outboard perimeter portion 73. The partition portion 71 may (but need not) coincide with the wing's leading edge 15.

One may now appreciate that the deicer pad 30 provides puncture safeguards during flight, offers increased flexibility during wing design, and accommodates wings when old deicing assemblies are retired. Although the aircraft 10, the wing 12, the ice protection system 20, the deicer pad 30, the chamber 40, the chamber 50, the layer assemblage 60, the frame 70, and/or the inflation source 80 have been shown and described as having certain forms and fabrications, such portrayals are not quintessential and represent only some of the possible adaptations of the claimed characteristics. Other obvious, equivalent, and/or otherwise akin embodiments could instead be created using the same or analogous attributes. For example, the deicer pad 30 can be used on non-wing airfoils, both on an aircraft or not, and inflation-channel alignment is not limited to spanwise and chordwise directions.

### REFERENCE NUMBERS

- 10: aircraft
- 11: fuselage
- 12: wings
- 13: inboard end
- 14: outboard end
- 15: leading edge
- 16: trailing edge
- 17: topside
- 18: bottomside
- 20: ice protection system
- 30: deicer pad
- 40: first chamber
- 41: inflation channels in first chamber
- 42: manifold channel for first chamber
- 43: connection port for first chamber
- 50: second chamber
- 51: inflation channels in second chamber
- 52: manifold channel for second chamber
- 53: connection port for second chamber
- 60: layered assemblage
- 61: base layer
- 62: channel-forming layer
- 63: channel-forming layer
- 64: channel-forming layer
- 65: channel-forming layer
- 66: cover layer
- 67: inflation-channel stitching
- 68: manifold-channel stitching
- 69: connection-port hole
- 70: frame
- 71: partition frame portion
- 72: inboard frame portion
- 73: outboard frame portion
- 74: topside frame portion
- 75: bottomside frame portion
- 80: inflation-fluid source
- 81: plumbing line to first chamber
- 82: plumbing line to second chamber
- 83: control valve for first chamber
- 84: control valve for second chamber

## Claims

1. A deicer pad (30) comprising;
a first chamber (40),
a first series of adjacent inflation channels (41) arranged sequentially in the first chamber (40),
a first manifold channel (42) fluidly communicating with the first series of inflation channels (41),
a first connection port (43) for fluidly connecting the first manifold channel (42) with inflation fluid,
a second chamber (50) bordering the first channel(40),
a second series of adjacent inflation channels (51) arranged sequentially in the second chamber (50),
a second manifold channel (52) fluidly communicating with the second series of inflation channels (51), and
a second connection port (53) for fluidly connecting the second manifold channel (52) with inflation fluid;
wherein:
the inflation channels (41) in the first chamber (40) do not communicate with the inflation channels (51) in the second chamber (50),
the first manifold channel (42) does not fluidly communicate with the second series of inflation chambers (51), and
the second manifold channel (52) does not fluidly communicate with the first series of inflation chambers (41).

2. A deicer pad (30) as set forth in the preceding claim, wherein the first connection port (43) is located on an inboard providence of one of the chambers (40/50).

3. A deicer pad (30) as set forth in either of the two preceding claims, wherein the second connection port (53) is located on an inboard providence of one of the chambers (40/50).

4. A deicer pad (30) as set forth in any of claims 1-3, wherein the first chamber (40) is an inboard chamber and the second chamber (50) is an outboard chamber and the chambers (40,50) are situated side-by-side in the spanwise direction.

5. A deicer pad (30) as set forth in the preceding claim, wherein the inflation channels (41) of the first chamber (40) extend in a chordwise direction and wherein the inflation channels (51) of the second chamber (50) also extend in a chordwise direction.

6. A deicer pad (30) as set forth in any of claims 1-3, wherein the first chamber (40) is bottomside chamber and the second chamber (50) is a topside chamber and the chambers (40,50) are situated side-by-side in a chordwise direction.

7. A deicer pad (30) as set forth in the preceding claim, wherein the inflation channels (41) of the first chamber (40) extend in a spanwise direction and wherein the inflation channels (51) of the second chamber (50) also extend in a spanwise direction.

8. A deicer pad (30) as set forth in any of claims 1-7, wherein the first connection port (43) and the second connection port (53) are both located on the same chamber (40/50).

9. A deicer pad (30) as set forth in any of claims 1-5 and claims 6-7, wherein the first connection port (43) and the second connection port (53) are located on different chambers (40/50).

10. A deicer pad (30) as set forth in any of claims 1-9, wherein the first connection port (43) and the second connection port (53) are both located on an inboard-bottomside site of the same chamber (40).

11. A deicer pad (30) as set forth in any of claims 1-9, wherein the first connection port (43) and the second connection port (53) are both located on an inboard-topside site of the same chamber (40).

12. A deicer pad (30) as set forth any of claims 1-9, wherein the first connection port (43) and the second connection port (53) straddle the expected location of the leading edge (15).

13. An airfoil (12) having an inboard end (13), an outboard end (14), a leading edge (15), a trailing edge (16), a topside (17), and an underside (18), wherein a deicer pad (30) as set forth in any of claims 1-12 is installed around the leading edge (15).

14. An aircraft (10) comprising:
a fuselage (11);
wings (12) wherein each wing (12) has an inboard end (13) attached to the fuselage, an outboard end (14), a leading edge (15), a trailing edge (16), a topside (17), and an underside (18);
a deicer pad (30) as set forth in any of claims 1-12 is installed around the leading edge (15) of each wing (12);
a source (80) on the fuselage (11) for supplying the connection ports (43,53) of the deicer pad (30) with inflation fluid;
a line (81) plumbed from the inflation-fluid source (80) to the first connection port (43); and
a line (82) plumbed from the inflation-fluid source (80) to the second connection port (53).
